(19)

**Europäisches Patentamt**
**European Patent Office**
**Office européen des brevets**

(11) **EP 1 693 496 A1**

(12) **EUROPEAN PATENT APPLICATION**


(43) Date of publication:
**23.08.2006 Bulletin 2006/34**

(51) Int Cl.:
***D04H 3/04*** *(2006.01)* ***D04H 13/00*** *(2006.01)*

(21) Application number: **06003053.3**

(22) Date of filing: **15.02.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **18.02.2005 JP 2005042796**



(71) Applicants:
- **Fukui Prefecture Government**
  **Fukui-shi**
  **Fukui 910-8580 (JP)**
- **Mitsuya Co., Ltd.**
  **Fukui-shi**
  **Fukui 910-0108 (JP)**

(72) Inventors:
- **Kawabe, Kazumasa**
  **Fukui-city**
  **Fukui 910-0102 (JP)**
- **Ishida, Kichiro**
  **Fukui-shi**
  **Fukui 910-0108 (JP)**

(74) Representative: **Strehl Schübel-Hopf & Partner**
**Maximilianstrasse 54**
**80538 München (DE)**


(54) **Fiber-reinforced sheet and process and apparatus for fabricating the same**


(57) A fiber-reinforced sheet comprises a first fiber sheet having a fiber bundle arranged and arrayed in one direction and arranged along the longitudinal direction of the fiber-reinforced sheet. The fiber bundle is so folded back at an inclination of a winding angle of θ degrees that the first fiber sheet is helically wound on the fiber-reinforced sheet. The fiber-reinforced sheet has three layers including: the first fiber sheet having the fiber bundle at an angle of 0 degrees with respect to the longitudinal direction; a second fiber sheet at an angle of +θ degrees; and a third fiber sheet at an angle of -θ degrees.

FIG. 1
1
2
6
5
6
B
3
L
4
W
WIDTHWISE DIRECTION
+θ
−θ
LONGITUDINAL DIRECTION


EP 1 693 496 A1

## Description

CROSSREFERENCE TO RELATED APPLICATION

This application is based upon and claims the benefit of priority from the prior Japanese Patent Application No. 2005-42796, filed on February 18, 2005, the entire contents of which are incorporated herein by reference.

TECHNICAL FIELD

The present invention relates to a multiaxial fiber-reinforced sheet using a reinforcing fiber bundle such as a carbon fiber bundle, a glass fiber bundle or aramid fiber bundle, and a process and an apparatus for manufacturing the fiber-reinforced sheet.

BACKGROUND OF THE INVENTION

The applicant has provided a fiber-reinforced sheet reinforced in two axial directions, which are symmetric with respect to the longitudinal direction of the fiber-reinforced sheet. Specifically, the fiber-reinforced sheet manufactured is configured by folding back and winding fiber sheets having fiber bundles so sequentially arranged and arrayed in one direction that the fiber sheets are wound at an inclination of θ degrees along a pair of folded-back guide portions. The fiber-reinforced sheet includes the two layers: a first fiber sheet having a fiber bundle at an angle of +θ degrees; and a second fiber sheet having a fiber bundle at an angle of -θ degrees (as referred to Japanese Application Kokai No. 2003-221771).

In the case of laminating the fiber sheets, moreover, it has been recently found that the interlayer separation of the case the fiber sheets are laminated the less occurs as the fiber sheets are the thinner (as referred to Non-Patent Publication: "Influences of Layer Thickness on Initial Breakage of Multi-Direction Reinforced Composite Material laminated Plate", written by Hideki Sasayama, Report of Japan Composite Material Association, Vol. 30, No. 4, accepted on July 31, 2003).

In the recent fiber-reinforced sheet, however, a multiaxial fiber-reinforced sheet of three or more axes is demanded in addition to the aforementioned biaxial fiber-reinforced sheet.

Therefore, the present invention contemplates to provide a fiber-reinforced sheet which can laminate fiber sheets easily in multiple axes and which hardly has the interlayer separation, and a process and an apparatus for manufacturing the fiber-reinforced sheet.

BRIEF SUMMARY OF THE INVENTION

According to an embodiment of the present invention, there is provided, in a multiaxial fiber-reinforced sheet, a first fiber sheet having a fiber bundle arranged and arrayed in one direction is arranged along the longitudinal direction of the fiber-reinforced sheet, and at least one sheet of fiber bundle different from the first fiber sheet is sequentially folded back and helically wound on the first fiber sheet at an inclination of a predetermined angle of θ degrees (0 degrees < θ < 90 degrees), a fiber-reinforced sheet having three layers comprising: a first fiber sheet having a fiber bundle direction of 0 degrees with respect to the longitudinal direction; a second fiber sheet having a fiber bundle direction of +θ degrees with respect to the longitudinal direction; and a third fiber sheet having a fiber bundle direction of -9 degrees with respect to the longitudinal direction.

According to another embodiment of the present invention, there is provided, in a multiaxial fiber-reinforced sheet, a first fiber sheet having a fiber bundle arranged and arrayed in one direction is arranged along the longitudinal direction of the fiber-reinforced sheet, at least one sheet of fiber bundle different from the first fiber sheet is sequentially folded back and helically wound on the first fiber sheet at an inclination of a predetermined angle of θ degrees (0 degrees < θ < 90 degrees), and the helically wound fiber sheet is laid on the first fiber sheet, a fiber-reinforced sheet having three layers comprising: a first fiber sheet having a fiber bundle direction of 0 degrees with respect to the longitudinal direction; a second fiber sheet having a fiber bundle direction of +θ degrees with respect to the longitudinal direction; and a third fiber sheet having a fiber bundle direction of -θ degrees with respect to the longitudinal direction.

According to the invention, it is possible to realize and easily manufacture the fiber-reinforced sheet, in which there are laminated: a first fiber sheet of 0 degrees with respect to the longitudinal direction of the fiber-reinforced sheet; a second fiber sheet of +θ degrees; and a third fiber sheet of -θ degrees.

BRIEF DESCRIPTION OF THE DRAWINGS

Fig. 1 is a top plan view of a fiber-reinforced sheet of a first embodiment;
Fig. 2 is a perspective view of the manufacturing apparatus of the first embodiment;
Fig. 3 a perspective view showing the same manufacturing apparatus and explaining a tenter chain in detail;
Fig. 4 is a partially enlarged perspective view of the tenter chain;
Fig. 5 is a block diagram of the same manufacturing apparatus;
Fig. 6 is a top plan view of a fiber-reinforced sheet of a second embodiment;
Fig. 7 is a perspective view of a manufacturing apparatus of the second embodiment;
Fig. 8 is a top plan view of a fiber-reinforced sheet of a fourth embodiment;

Fig. 9 is a perspective view of a manufacturing apparatus of the fourth embodiment;

Figs. 10A to 10C are explanatory views of the case, in which a fourth fiber sheet is laminated on a triaxial fiber-reinforced sheet;

Figs. 11A to 11C are explanatory views of the case, in which the fourth fiber sheet is laminated on the triaxial fiber-reinforced sheet;

Figs. 12A to 12C are explanatory views of the case, in which the fourth fiber sheet is laminated on the triaxial fiber-reinforced sheet;

Fig. 13 is a view showing the motions of a first adjust roll and a second adjust roll and presents a side elevation of the state, in which a second tenter chain stops; and

Fig. 14 is a side elevation showing the state, in which the second tenter chain is traveling.

## DETAILED DESCRIPTION OF THE INVENTION

The individual embodiments of the invention are described in the following.

### (First Embodiment)

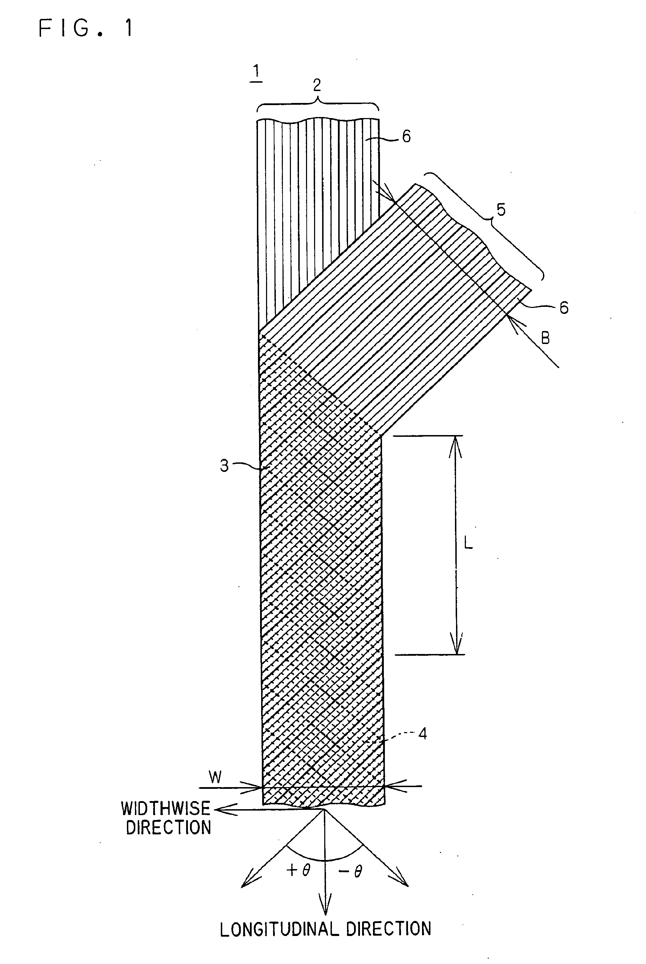

The first embodiment of the invention is described with reference to Fig. 1 to Fig. 5.

### (1) Configuration of Fiber-Reinforced Sheet 1

The fiber-reinforced sheet 1 of the first embodiment is described with reference to Fig. 1.

Fig. 1 is a top plan view of the fiber-reinforced sheet 1.

This fiber-reinforced sheet 1 is a triaxial fiber-reinforced sheet, in which fiber sheets having a fiber bundle 6 arranged in one direction are laminated in three layers. Of these three layers, a first fiber sheet 2 is arranged along the longitudinal direction of the fiber-reinforced sheet 1. Moreover, the fiber bundle 6 is sequentially folded back in an overlap having an inclination of a predetermined angle of θ degrees (as will be called the "winding angle θ) with respect to the longitudinal direction of the fiber-reinforced sheet 1 so that it is helically wound on the first fiber sheet 2.

As a result, the triaxial fiber-reinforced sheet 1 is configured of three layers: the first fiber sheet 2 having a fiber bundle direction of 0 degrees; a second fiber sheet 3 having a fiber bundle direction of +θ degrees; and a third fiber sheet 4 having a fiber bundle direction of -θ degrees.

Here, the fiber bundles are exemplified by a reinforced one such as a carbon fiber bundle, a glass fiber bundle or an aramid fiber bundle. On the other hand, the fiber bundles configuring the individual fiber sheets 2, 3 and 4 are made of the split yarns which are continuously split wide and thin. Moreover, the fiber bundles are made of thermally fused yarns or fiber bundles adhered with a sealer. Still moreover, the individual fiber sheets 2, 3 and 4 are prepreg sheet impregnated with a thermoplastic resin or a thermoset resin.

Here, the winding angle θ degrees is 0 degrees to 90 degrees, or preferably 15 degrees to 75 degrees. The fiber sheets are arranged in the longitudinal direction of the fiber-reinforced sheet 1, as described above, for θ = 0 degrees, and in the widthwise direction for θ = 90 degrees.

On the other hand, that first fiber sheet 2 and the fiber sheets 3 and 4 have a thickness of 0.005 mm to 0.08 mm, or preferably 0.01 mm to 0.06 mm. As a result, no inter-layer separation takes place between the first fiber sheet 2, the second fiber sheet 3 and the third fiber sheet 4.

With this fiber-reinforced sheet 1, it is possible to easily realize a large-sized composite sheet material having a pseudo-isotropy and a symmetry in the thickness direction. Moreover, the fiber-reinforced sheet 1 has a three-layered configuration of the first fiber sheet 2, the second fiber sheet 3 and the fourth fiber sheet 4 so that it can realize a highly strength sheet material.

### (2) Configuration of Fiber-Reinforced Sheet

### Manufacturing Apparatus 10

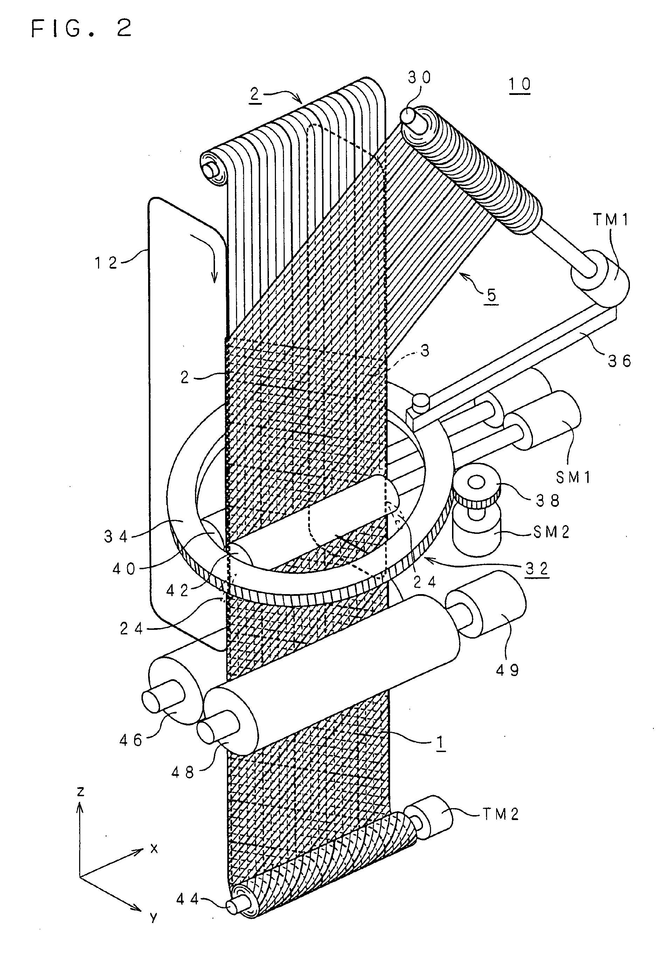

With reference to Fig. 2 to Fig. 5, here is described the fiber-reinforced sheet manufacturing apparatus 10 for manufacturing the fiber-reinforced sheet 1 described above.

Fig. 2 is a perspective view of the fiber-reinforced sheet manufacturing apparatus 10. The coordinate system of the invention is defined at first. In Fig. 2, it is set that: the longitudinal direction of the fiber-reinforced sheet 1 is on a z-axis; the widthwise direction of the fiber-reinforced sheet 1 is on an x-axis direction; and the direction (i.e., the normal direction) perpendicular to the widthwise direction is on a y-axis direction.

### (2-1) First Fiber Sheet Feed Roll 26

This first fiber sheet feed roll 26 for feeding the first fiber sheet 2 is so mounted that its axis of rotation is arranged on the x-axis direction. This first fiber sheet feed roll 26 is driven to rotate when the first fiber sheet 2 wound thereon is pulled.

### (2-2) Tenter Chains 12

In order to cause the first fiber sheet 2 and the fiber-reinforced sheet 1 to travel in the -z-axis direction, a pair of tenter chains 12 and 12 are disposed in parallel with each other along the z-axis at positions below the first fiber sheet feed roll 26 and corresponding to the two ear portions of the fiber-reinforced sheet 1.

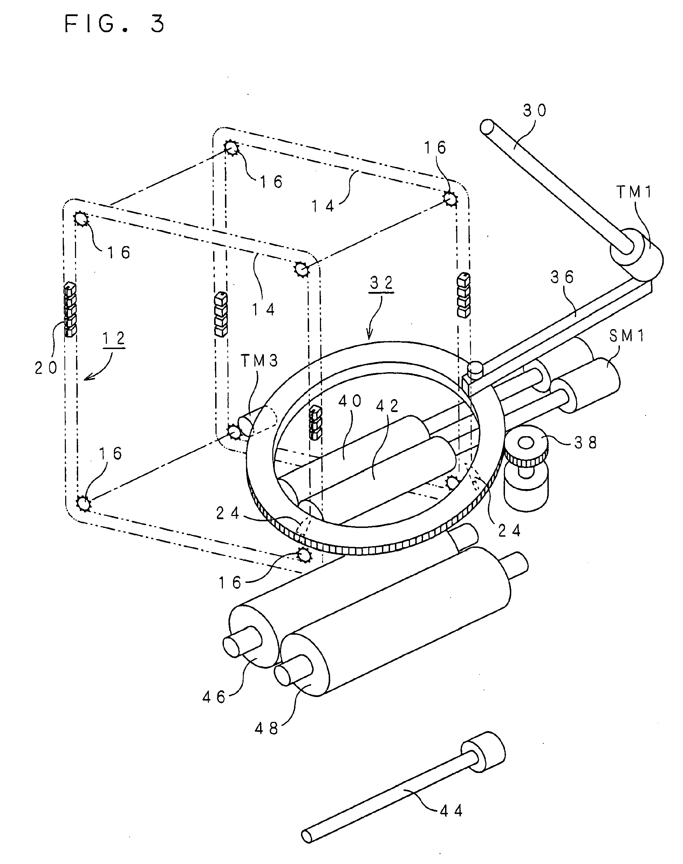

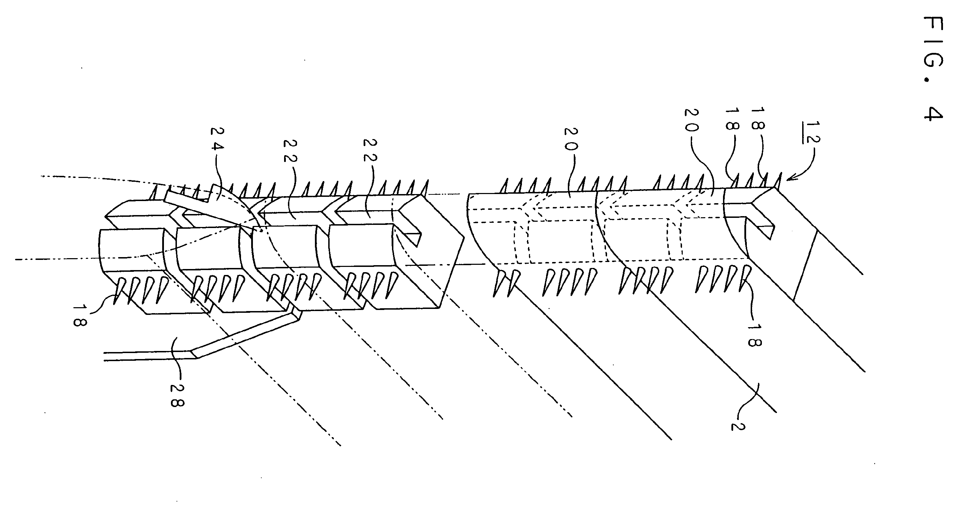

The tenter chains 12 and 12 are pin tenters, as will be described with reference to Fig. 3 and Fig. 4. In Fig. 2, however the tenter chains 12 are shown in a simplified configuration.

At first, the description is made on the lefthand tenter chain 12.

In the tenter chain 12, as shown in Fig. 3, an endless chain 14 is arranged generally in a rectangular form and provided with chain wheels 16 at its individual bent portions. As these chain wheels 16 rotate, the chain 14 travels in a counter-clockwise direction of Fig. 3 (although it travels clockwise in Fig. 2). The chain wheels 16 are driven to rotate by a torque control motor TM3 capable of performing the torque control.

In the chain 14, as shown in Fig. 4, a plurality of holders 20 having needles 18 embedded therein are connected to each other. These holders 20 sequentially move as the chain 14 moves. The holders 20 are formed, as shown in Fig. 4, generally in a cubic shape having individually four needles 18 embedded in the directions of the +y-axis and the -y-axis. The fiber-reinforced sheet is anchored at the needles 18 protruding in the +y-axis direction and the -y-axis direction, so that the fiber-reinforced sheet 1 is driven to travel by the tenter chain 12.

Moreover, a groove 22 is formed in the lefthand side portion of the holder 20. In this groove 22, a cutter 24, as will be described hereinafter, cuts the fiber-reinforced sheet 1 anchored at the needles 18.

A similar configuration is given to the righthand tenter chain 12.

In the vicinities of the lower end portions of the chains 14 to move in the z-axis direction at the paired tenter chains 12 and 12, a pair of removing plates 28 and 28 are disposed to remove the fiber-reinforced sheet 1 anchored at the needles 18 of the holders 20. The removing plate 28 has a triangular top, so that the fiber-reinforced sheet 1 cut into halves by the cutter 24 moves, as its end portion comes to that triangular removing plate 28, to diverge to the outside while being divided. The fiber-reinforced sheet 1 thus diverges so that it comes out of the needles 18.

(2-3) Winding Device 32

Outside of the paired tenter chains 12 and 12, a fiber sheet feed roll 30 is arranged to have the fiber bundle 6 having the fiber bundle arranged and arrayed in one direction. This fiber sheet feed roll 30 is driven to rotate by a torque control motor TM1. The spindle of this fiber sheet feed roll 30 is arranged at an inclination of $\theta$ degrees with respect to the longitudinal direction of the fiber-reinforced sheet 1, i.e., the z-axis direction.

The winding device 32 is provided for driving the torque control motor TM1 and the fiber sheet feed roll 30 on the paired tenter chains 12 and 12.

In this winding device 32, an arm member 36 protrudes outward from a ring-shaped ring gear 34, and the torque control motor TM1 is arranged at the angle of $\theta$ degrees at the leading end of that arm member 36. The fiber sheet feed roll 30 has its shaft connected to the spindle of the torque control motor TM1.

The ring gear 34 is driven to rotate on an axis parallel to the z-axis by a rotating speed control motor SM2 through a gear 38.

(2-4) Traveling Rolls 40 and 42

Below the winding device 32, a pair of traveling rolls 40 and 42 are disposed to cause the completed fiber-reinforced sheet 1 to travel. The traveling roll 42 is driven by a rotating speed control motor SM1.

(2-5) Sheet Recovery Roll 44

Below the traveling rolls 40 and 42, a sheet recovery roll 44 is arranged to recover the fiber-reinforced sheet 1. This sheet recovery roll 44 is driven to rotate by a torque control motor TM2.

(2-6) Heating Rolls 46 and 48

Between the traveling rolls 40 and 42 and the sheet recovery roll 44, a pair of heating rolls 46 and 48 are disposed to heat and press the fiber-reinforced sheet 1 having three laminated layers.

Before the fiber-reinforced sheet 1 is inserted between the heating rolls 46 and 48, although omitted from Fig. 2, a peeling paper feed roll is disposed to feed sheets of peeling paper to the two faces of the fiber-reinforced sheet 1. Below the heating rolls 46 and 48, moreover, a pair of peeling paper recovery rolls are disposed to recover the peeling paper sheets applied to the two faces of the fiber-reinforced sheet 1.

(2-7) Electrical Configuration of Fiber-Reinforced

Sheet Manufacturing Apparatus 10

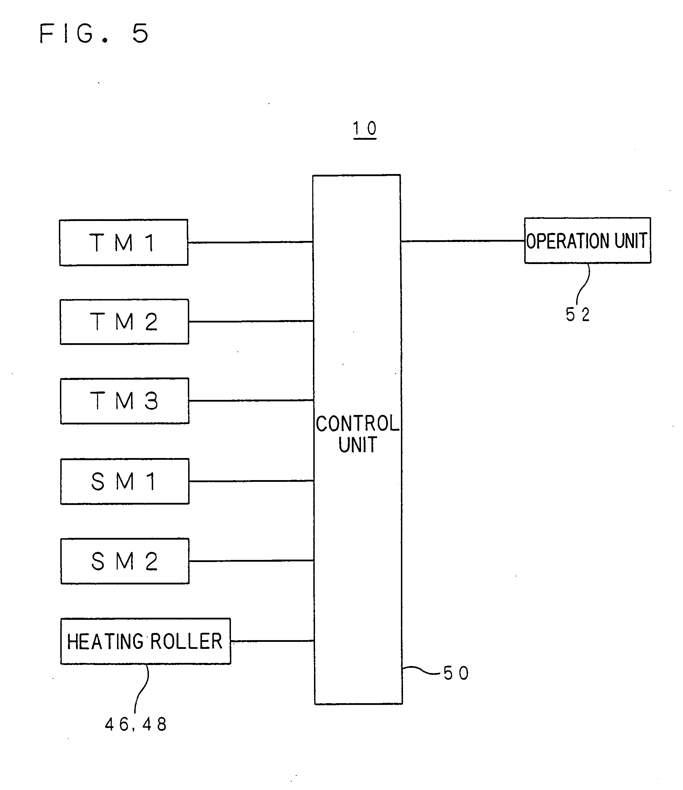

Fig. 5 is a block diagram of the fiber-reinforced sheet manufacturing apparatus 10.

By a control unit 50 configured of a computer, the rotating speed control motors SM1 and SM2 and the torque control motors TM1, TM2 and TM3 are connected, and the heating units for controlling the heating operations of the heating rolls 46 and 48 and a motor 49 for driving the same to rotate are also connected, thereby to control the rotating speeds, the torques and the temperatures. An operation unit 52 for operating the control unit 50 is disposed in the fiber-reinforced sheet manufacturing apparatus 10.

(3) Operating States of Fiber-Reinforced Sheet

Manufacturing Apparatus 10

Here is described the process for manufacturing the triaxial fiber-reinforced sheet 1, as shown in Fig. 1, by using the fiber-reinforced sheet manufacturing apparatus 10 thus far explained.

(3-1) First Step

The first fiber sheet 2 having the fiber bundle arranged and arrayed in the z-axis direction is fed from the first fiber sheet feed roll 26 and is attached to the paired tenter chains 12 and 12. In this case, the first fiber sheet 2 is hooked at its two ear portions individually by the needles 18 of the holders 20 of the paired tenter chains 12 and 12 so that the first fiber sheet 2 is caused to travel in an extended state in the -z-direction.

(3-2) Second Step

The ring gear 34 is driven to rotate by the rotating speed control motor SM2 thereby to draw the fiber bundle 6 at the inclination θ from the fiber sheet feed roll 30.

(3-3) Third Step

The ring gear 34 is driven to rotate at a predetermined speed so that the fiber sheet 6 drawn is folded back at the position of the righthand tenter chain 12. In this case, the first fiber sheet 2 traveling in the extended state between the paired tenter chains 12 and 12 is so folded back as is wrapped by the fiber bundle 6. This folding-back can be performed by driving the ring gear 34 of the winding device 32 to rotate.

What is important here is that the fiber bundle 6 is folded back by the tenter chains 12 and 12 so that even a fiber bundle of a large fineness can be folded back. Specifically, the fiber bundle of a large fineness is split into a sheet but can be folded back along the tenter chains 12 and 12.

(3-4) Fourth Step

When the ring gear 34 is driven to rotate at a predetermined speed and when the first fiber sheet 2 is driven to travel at a predetermined speed by the paired tenter chains 12 and 12, the fiber bundle 6 folded back by the righthand tenter chain 12 is drawn at the inclination of +θ degrees from the fiber sheet feed roll 30 and further from the righthand tenter chain 12 toward the lefthand tenter chain 12. As a result, the second fiber sheet 3 can be formed.

(3-5) Fifth Step

Moreover, the ring gear 34 is driven to rotate at a predetermined speed thereby to cause the first fiber sheet 2 to travel at a predetermined speed. Then, the second fiber sheet 3 is folded back by the lefthand tenter chain 12.

(3-6) Sixth Step

When the ring gear 34 is drive to rotate at a predetermined speed to cause the second fiber sheet 2 to travel at a predetermined speed, the third fiber sheet 4 is formed while the second fiber sheet 3 folded back is pulled out by the fiber sheet feed roll 30 from the lefthand tenter chain 12 toward the righthand tenter chain 12.

(3-7) Seventh Step

When the ring gear 34 is drive to rotate at a predetermined speed to cause the second fiber sheet 2 to travel at a predetermined speed, the third fiber sheet 4 is folded back by the righthand tenter chain 12. Then, the second fiber sheet 3 is formed as in the same manner as in the third step.

Likewise, one cycle composed of the third step to the seventh step is repeated to wind the fiber bundle 6 helically at the inclination of the winding angle θ degrees on the paired tenter chains 12 and 12 thereby to manufacture the triaxial fiber-reinforced sheet 1, as shown in Fig. 1.

(3-8) Eighth Step

The triaxial fiber-reinforced sheet 1 manufactured is being pulled by the paired traveling rolls 40 and 42. The triaxial fiber-reinforced sheet 1 is then separated into the second fiber sheet 3 and the third fiber sheet 4 by the cutters 24 interposed between the paired traveling rolls 40 and 42. Specifically, the fiber-reinforced sheet 1 is separated (as referred to Fig. 4) at its two ear portions along the z-axis direction by the paired cutters 24 and 24. The fiber-reinforced sheet 1 thus separated by the cutters 24 is expanded in the +y-direction and the -y-direction by the triangular removing plates 28 so that it is removed from the needles 18 of the holders 20 of the tenter chains 12 and 12. Here, the cutters 24 are fitted in the grooves 22 of the holders 20, as described hereinbefore, so that they do not contact with the holders 20.

(3-9) Ninth Step

The triaxial fiber-reinforced sheet 1 configured of the three layers of the first fiber sheet 2, the second fiber sheet 3 and the third fiber sheet 4 is moved between the paired heating rolls 46 and 48 so that it is heated and pressed.

Here in the aforementioned heating and pressing case, sheets of peeling paper are applied to the two faces of the fiber-reinforced sheet 1, and this fiber-reinforced sheet 1 is heated and pressed through the peeling paper sheets. When the heating and pressing operations are ended, the peeling paper sheets are recovered from the two faces.

(3-10) Tenth Step

The triaxial fiber-reinforced sheet 1 having its peeling paper sheets removed is recovered by the sheet recovery roll 44.

In this manufacturing process, the rotating speed of the winding device 32 by the rotating speed control motor SM2 is equalized to that of the rotating speed control motor SM1 for driving the paired traveling rolls 40 and 42. Moreover, the torque of the torque control motor TM3 for causing the tenter chains to travel has to be adjusted to the tension to pull the fiber-reinforced sheet 1, and the torque of the torque control motor TM2 for causing the sheet recovery roll 44 to rotate is adjusted to the rotating speed and the tension of the fiber-reinforced sheet 1 to be laminated. This adjustment is so performed by the control unit 50 as to cause no slackness.

Specifically, while the fiber bundle 6 being caused to make one rotation by the rotation of the rotating speed control motor SM2, the rotation of the rotating speed control motor SM1 is controlled to feed the fiber-reinforced sheet 1 by L (i.e., a take-up length of one rotation).

Here, the relation between the take-up length L of one rotation of the winding device 32 and the width B of the fiber bundle 6 shown in Fig. 1 is expressed by:

$$L = B/\sin\theta,$$

and

the relation between the width W of the fiber-reinforced sheet 1 and the width B of the fiber bundle 6 is expressed by:

$$W = B/(2 \times \cos\theta).$$

(4) Advantages of the Invention

By using the fiber-reinforced sheet manufacturing apparatus 10, as has been described hereinbefore, it is possible to manufacture the triaxial fiber-reinforced sheet 1 simply and continuously.

(Modification of First Embodiment)

In the first embodiment, the fiber sheet feed roll 30 is used as one for feeding the fiber sheet 3, however, instead of this, employable is a structure in which a plurality of bobbins around which fiber bundle 6 is wound are set in an array to feed a fiber sheet 5.

Incidentally, the structure may be applied to a case of feeding the first fiber sheet 2.

(Modification of Second Embodiment)

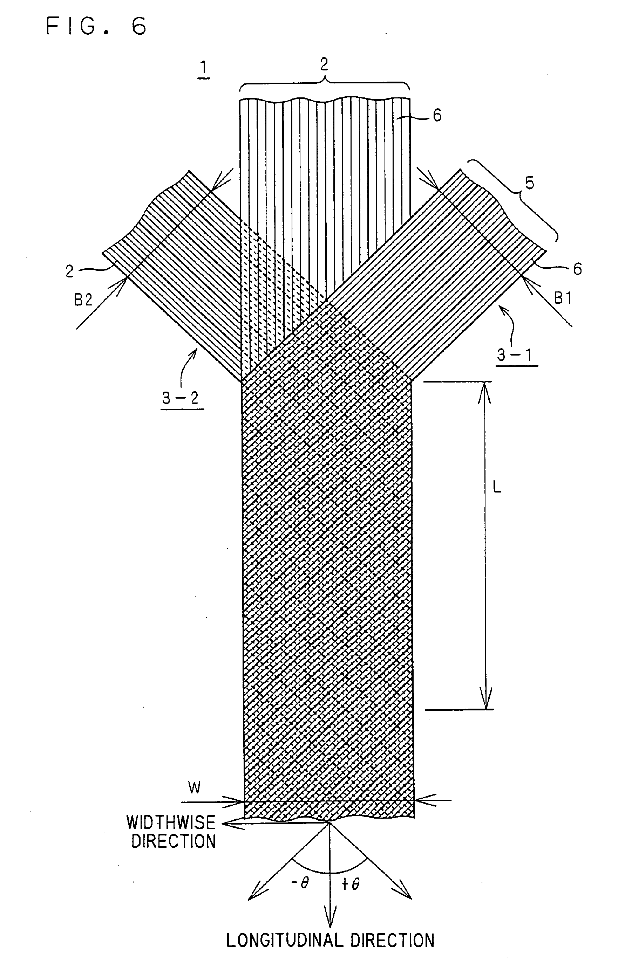

The fiber-reinforced sheet 1 of a second embodiment is described with reference to Fig. 6.

In the first embodiment, one sheet of fiber bundle 6 is folded back to form the second fiber sheet 3 and the third fiber sheet 4 thereby to manufacture the fiber-reinforced sheet 1. In this embodiment, as shown in Fig. 6, the two sheets of fiber bundles 6-1 and 6-2 are folded back alternately and sequentially on the first fiber sheet 2 so that the second fiber sheet 3 and the third fiber sheet 4 are formed to manufacture the fiber-reinforced sheet 1.

In this case, the take-up length L of one rotation is expressed by:

$$L = (B1 + B2)/\sin\theta,$$

and

the width W of the fiber-reinforced sheet 1 is expressed by:

$$W = (B1 + B2)/(2 \times \cos\theta).$$

Here, B1 designates the width of the first fiber bundle 6-1, and B2 designates the width of the second fiber bundle 6-2.

(Modification of Second Embodiment)

The second embodiment presents the configuration, in which the two fiber bundles 6-1 and 6-2 are folded back and wound alternately and sequentially. However, the configuration should not be limited thereto but three or more fiber bundles 6 may also be sequentially folded back to manufacture the fiber-reinforced sheet 1.

In case the fiber-reinforced sheet 1 is manufactured by using four sheets of fiber bundle 6, for example, four fiber sheet feed rolls 30 are arranged at every 45 degrees on the paired tenter chains 12 and 12. Moreover, these four fiber sheet feed rolls 30 are sequentially driven to rotate at an equal rotating speed around the paired tenter chains 12 and 12, so that the fiber-reinforced sheet 1 can be manufactured.

Here, the width W of the fiber-reinforced sheet 1 of the case using n-sheets of fiber bundle 6 and the length L of the fiber-reinforced sheet 1 manufactured by the process of one cycle are expressed, as follows:

$$W = \frac{1}{2}\left[\sum_{k=1}^{n} Bk\right]\frac{1}{\cos\theta}$$

$$L = \left[ \sum_{k=1}^{n} Bk \right] \frac{1}{\sin\theta}$$

Here, Bk designates the width of k-th fiber sheet 1 (1=<k=<n), and θ designates the winding angle.

(Third Embodiment)

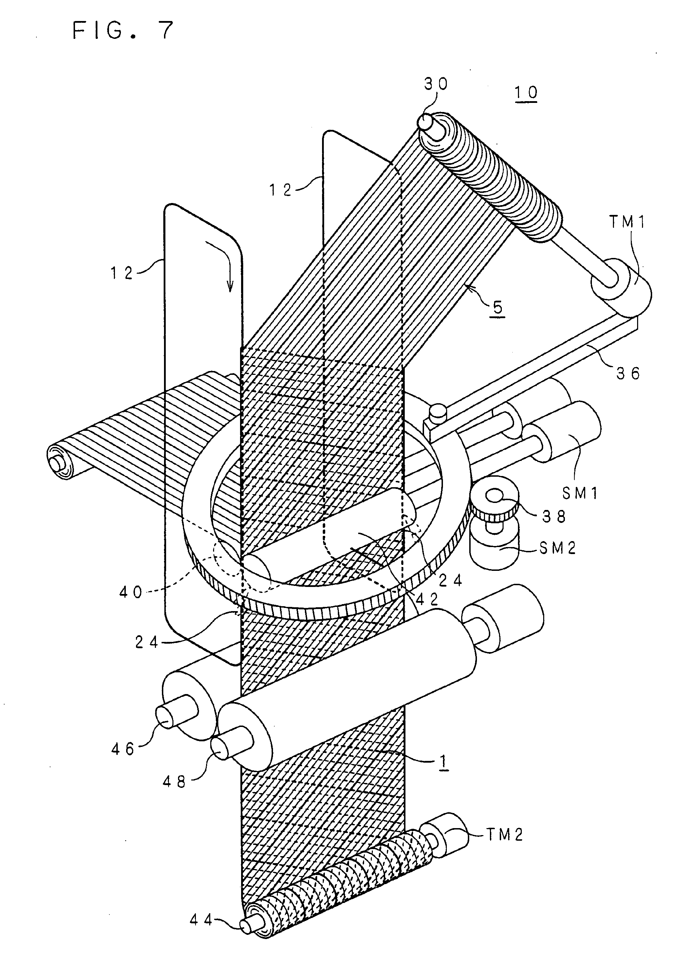

A third embodiment is described with reference to Fig. 7.

In the first embodiment, the fiber bundle 6 is wound on the first fiber sheet 2 to form the three-layered fiber sheet layer. In this embodiment, on the other hand, the first fiber sheet 2 is wound at the angle θ between the paired tenter chains 12 and 12 by the fiber bundle 6 thereby to form the second fiber sheet 3 and the third fiber sheet 3 at first.

The first fiber sheet 2 is laminated from the outside on the biaxial fiber-reinforced sheet, which is formed by winding the second fiber sheet 3 and the third fiber sheet 4 helically, thereby to manufacture the triaxial fiber-reinforced sheet 1.

In the fiber-reinforced sheet manufacturing apparatus 10 of this embodiment, therefore, the second fiber sheet 3 and the third fiber sheet 4 are exclusively caused to travel between the tenter chains 12 and 12, and the first fiber sheet 2 is joined just before the paired traveling rolls 40 and 42, so that the triaxial fiber-reinforced sheet 1 is manufactured by the paired traveling rolls 40 and 42.

The subsequent steps are similar to those of the first embodiment.

In this embodiment, too, it is possible to manufacture the fiber-reinforced sheet 1, which has a pseudo-isotropy and a symmetric lamination in the thickness direction.

(Fourth Embodiment)

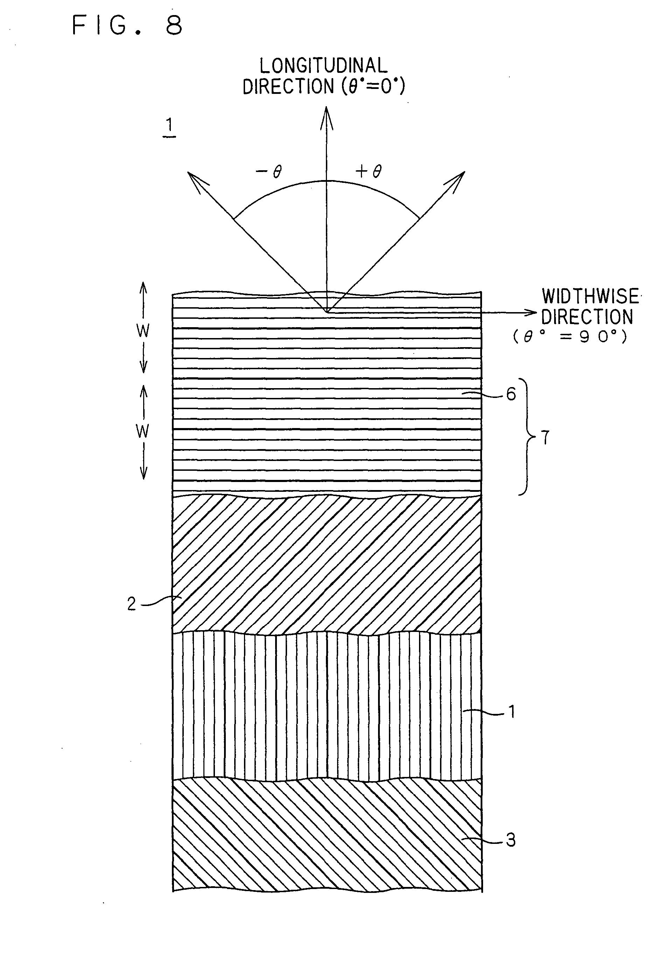

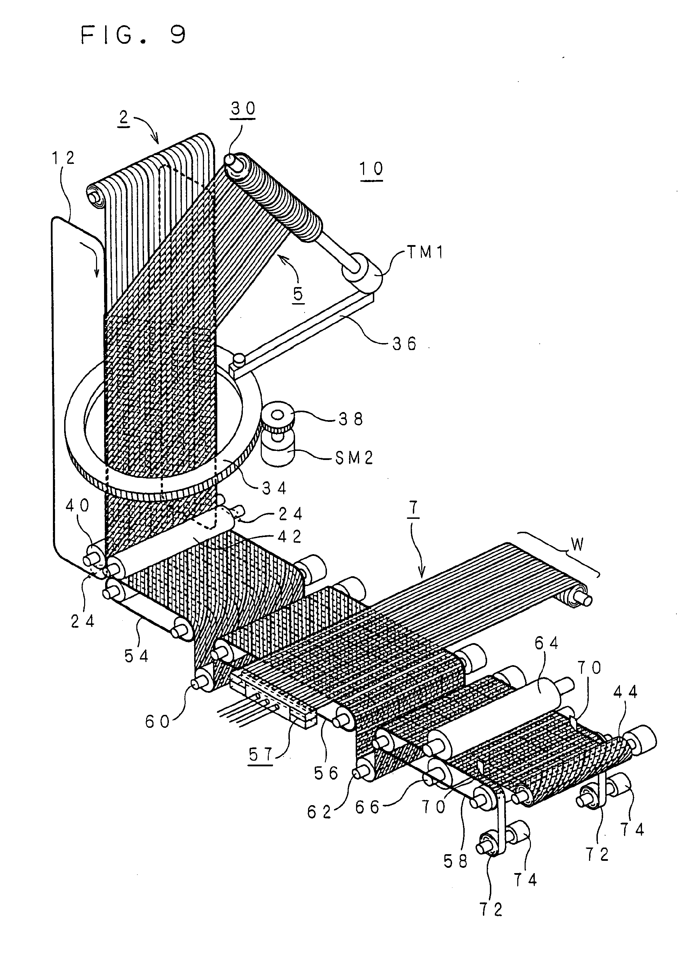

This fourth embodiment of the invention is described in the following with reference to Fig. 8 to Fig. 12.

The first embodiment to the third embodiment have been described on the triaxial fiber-reinforced sheet 1, but the fourth embodiment is described on a quadrangular fiber-reinforced sheet.

(1) Configuration of Fiber-Reinforced Sheet 1

Fig. 8 is a top plan view of the quadrangular fiber-reinforced sheet 1.

The fiber-reinforced sheet 1 has the first fiber sheet 2 having the fiber bundle 6 arranged in the z-axis direction. The fiber bundles 6 having fiber bundles arranged in one direction is so sequentially folded back in an overlap having an inclination of the winding angle θ degrees with respect to the longitudinal direction of the fiber-reinforced sheet 1 that the first fiber sheet 2 is helically wound on the fiber-reinforced sheet 1. As a result, a triangle fiber-reinforced sheet is formed and composed of the first fiber sheet 2, the second fiber sheet 3 having the fiber bundle 6 in the direction of +θ degrees, and the third fiber sheet 4 having the fiber bundle 6 in the direction of -θ degrees. Next, the quadrangular fiber-reinforced sheet is formed by laminating a fourth fiber sheet 7 having the fiber bundle 6 arranged in the direction of θ = 90 degrees with respect to the longitudinal direction, on the triangular fiber-reinforced sheet.

This quadrangular fiber-reinforced sheet 1 also can also easily realize a large-sized composite sheet having a pseudo-symmetry and a symmetry in the thickness direction. Like the first embodiment, these four-layered fiber sheets also have a thickness of 0.005 mm to 0.08 mm, or preferably 0.01 mm to 0.06 mm.

(2) Configuration of Fiber-Reinforced Sheet Manufacturing Apparatus 10

The fiber-reinforced sheet manufacturing apparatus 10 for manufacturing the quadrangular fiber-reinforced sheet 1 is described in the following.

In the configuration of this fiber-reinforced sheet manufacturing apparatus 10, the portions up to the traveling rolls 40 and 42 are not described because they are similar to those of the fiber-reinforced sheet manufacturing apparatus 10 of the first embodiment.

On the side of the traveling rolls 40 and 42, there are disposed first tenter chains 54 and 54 for moving the triangular fiber-reinforced sheet 1 in the +y-axis direction. Second tenter chains 56 and 56 are disposed at a predetermined spacing from those first tenter chains 54 and 54.

Third tenter chains 58 and 58 are also disposed at a predetermined spacing from the second tenter chains 56 and 56.

Between the first tenter chains 54 and the second tenter chains 56, there is interposed a first adjust roll 60, which can be freely moved upward and downward.

Midway of the second tenter chains 56, there is disposed a fourth fiber sheet laminating device 57 for laminating the fourth fiber sheet 7 on the triangular fiber-reinforced sheet 1. This fourth fiber sheet laminating device 57 will be described in detail.

Between the second tenter chains 56 and the third tenter chains 58, there is also interposed a second adjust roll 62, which can be freely moved upward and downward.

Midway of the third tenter chains 58, there are disposed heating rolls 64 and 66 for heating and pressing the quadrangular fiber-reinforced sheet 1 having four laminated layers. Near the ending positions of the third tenter chains 58, there are disposed a pair of cutters 68, which can cut off the two ear portions of the quadrangular fiber-reinforced sheet 1.

Near the ending side of the third tenter chains 58, moreover, there is disposed the sheet recovery roll 44 for recovering the quadrangular fiber-reinforced sheet 1 completed.

Moreover, a pair of righthand and lefthand ear recovery rolls 72 are driven to rotate by motors 74 so as to recover the two ear portions cut off by cutters 70.

(3) Operating States of Fiber-Reinforced Sheet Manufacturing Apparatus 10

The operating states of the fiber-reinforced sheet manufacturing apparatus 10 are described in the following.

The description of the process till the three-layered fiber-reinforced sheet 1 is omitted, because it is similar to that of the first embodiment.

(3-1) First Step

At the first step, the triaxial fiber-reinforced sheet 1 is attached at its two ear portions to the first tenter chains 54 and 54. These tenter chains 54 are pin tenters having their holders embedding needles, by which the three-layered fiber-reinforced sheet 1 are hooked in an extended state. Then, the triaxial fiber-reinforced sheet 1 travels in the +y-axis direction along the first tenter chains 54 and 54.

(3-2) Second Step

When the transfer by the first tenter chains 54 and 54 is ended, the fiber-reinforced sheet 1 is removed at the second step from the tenter chains 54 and 54. The fiber-reinforced sheet 1 is made to travel on the first adjust roll 60 and is hooked by the second tenter chains 56 and 56. The fist adjust roll 60 can be moved upward and downward to adjust the extent of the fiber-reinforced sheet 1 to reside between the first tenter chains 54 and the second tenter chains 56.

The second tenter chains 56 are also pin tenters for transferring the triaxial fiber-reinforced sheet 1 in the extended state.

(3-3) Third Step

At the third step, the fourth fiber sheet 7 is laminated on the triaxial fiber-reinforced sheet 1 transferred by the second tenter chains 56 and 56, by the fourth fiber sheet laminating device 57. This laminating operation is also described hereinafter in detail.

(3-4) Fourth Step

The fiber-reinforced sheet 1 thus laminated to have the four layers is removed from the second tenter chains 56 and 56 and is fed to the second adjust roll 62 and attached to the third tenter chains 58 and 58. These third tenter chains 58 are also pin tenters for transferring the quadrangular fiber-reinforced sheet 1 in the extended state.

(3-5) Fifth Step

The quadrangular fiber-reinforced sheet 1 being transferred by the third tenter chains 58 and 58 is heated and pressed by the paired heating rolls 64 and 66 so that the quadrangular fiber-reinforced sheet 1 is integrated.

(3-6) Sixth Step

In the quadrangular fiber-reinforced sheet 1 having the four laminated layers, the two ear portions holed by the individual tenter chains are unnecessary so that they are cut off by the paired cutters 70 and 70. The quadrangular fiber-reinforced sheet 1 thus having its two ear portions cut off is recovered by the sheet recovery roll 44. Here, these two unnecessary ear portions are recovered by the ear recovery rolls 72 and 72.

Thus, it is possible to manufacture the quadrangular fiber-reinforced sheet 1.

(4) Configuration and Operating States of Fourth Fiber Sheet Laminating Device 57

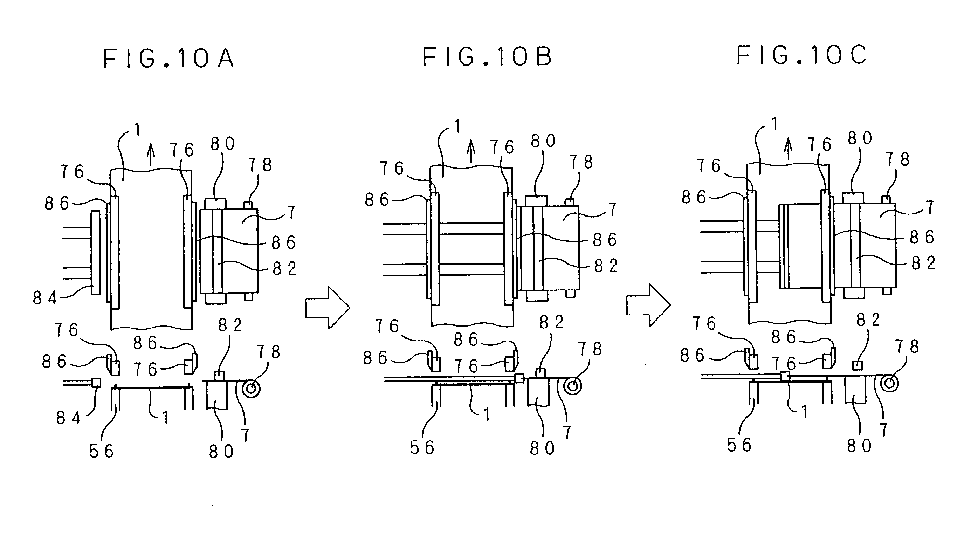

The configuration and operating states of the fourth fiber sheet laminating device 57 for laminating the fourth fiber sheet 7 on the triangular fiber-reinforced sheet 1 are described with reference to Figs. 10A to 10C.

Figs. 10A to 10C are diagrams showing the states, in which the fourth fiber sheet 7 is laminated according to the configuration and operating states of the fourth fiber sheet laminating device 57. In the individual diagrams of Figs. 10A to 10C to Figs. 12A to 12C, the upper diagrams are top plan views of the fiber-reinforced sheet 1 traveling upward from the bottom with the second tenter chains 56. On the other hand, the lower diagrams showing the positions of the second tenter chains 56 and taken forward from the back.

(4-1) Configuration of Fourth Fiber Sheet Laminating Device 57

The configuration of the fourth fiber sheet laminating device 57 is described at first.

A pair of rod-shaped first holding members 76 and 76 are so positioned above the second tenter chains 56 and 56 as to move upward and downward along the two sides of the second tenter chains 56.

Cutters 86 and 86 are vertically movably disposed on the two sides of the paired first holding members 76 and 76.

In a direction perpendicular to the second tenter chain 56, a fourth fiber sheet feed roll 78 is disposed to feed the fourth fiber sheet 7. Between the fourth fiber sheet feed roll 78 and the righthand second tenter chain 56, there is interposed a bed 80, above which a second holding member 82 is disposed vertically movably.

Across the paired second tenter chains 56 and 56 on the opposite side of the fourth fiber sheet feed roll 78, there is disposed a grip member 84 for fetching the fourth fiber sheet 7. This grip member 84 has a clip at its leading end portion capable of gripping the end portion of the fourth fiber sheet, and is made movable along the x-axis direction.

The process for laminating the fourth fiber sheet 7 by using the fourth fiber sheet laminating device 57 is described. (4-2) First Step

The first step is described with reference to Fig. 10A.

The triangular fiber-reinforced sheet 1 is made to travel in an extended state by the second tenter chains 56 and 56. In this case, the first holding members 76 and 76 are not holding the traveling triangular fiber-reinforced sheet 1. On the other hand, the fourth fiber sheet 7 let off from the fourth fiber sheet feed roll 78 is held on the bed 80 by the second holding member 82. In this state, the fourth fiber sheet 7 having the width W protrudes at its end portion from the bed 80 (as referred to Fig. 10A)

(4-3) Second Step

The second step is described with reference to Fig. 10B.

The travel of the triangular fiber-reinforced sheet 1 is stopped. The grip member 84 comes into a state protruding from a standby state and moves above the paired second tenter chains 56 and 56 so that it grips the end portion of the fourth fiber sheet 7 of the width W protruding from the bed 80.

(4-4) Third Step

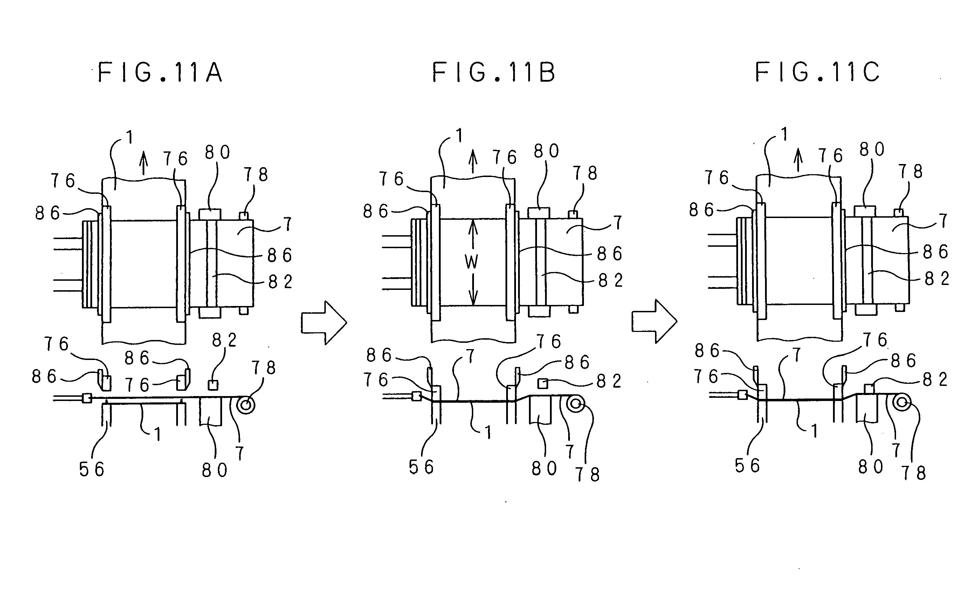

The third step is described with reference to Fig. 10C and Fig. 11A.

As shown in Fig. 10C, the grip member 84 having gripped the end portion of the fourth fiber sheet 7 of the width W starts moving from the protruding state to the position of the standby state. As a result of this movement, the fourth fiber sheet 7 covers the triangular fiber-reinforced sheet 1. In case the grip member 84 draws the fourth fiber sheet 7, the second holding member 82 moves upward to release the holding state of the fourth fiber sheet 7.

When the grip member 84 comes into the completely restored state, as shown in Fig. 11A, the fourth fiber sheet 7 having the fiber bundle 6 of the direction $\theta = 90$ degrees comes into the state covering the triangular fiber-reinforced sheet 1.

(4-5) Fourth Step

The fourth step is described with reference to Fig. 10C and Figs. 11B and 11C.

As shown in Fig. 11B, the paired first holding members 76 and 76 are moved downward to press the fourth fiber sheet 7 onto the triangular fiber-reinforced sheet 1.

As shown in Fig. 11C, moreover, the second holding member 82 is again moved downward to press and fix the fourth fiber sheet 7 on the bed 80.

(4-6) Fifth Step

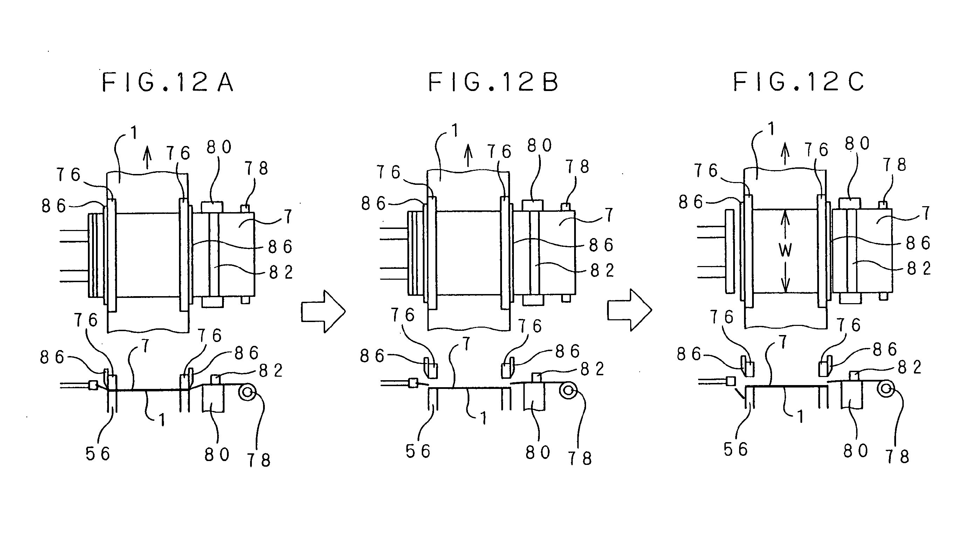

The fifth step is described with reference to Fig. 12A and Fig. 12B.

As shown in Fig. 12A, the cutters 86 and 86 disposed on the two sides of the paired first holding members 76 are moved downward to cut off the fourth fiber sheet 7 at the positions of the two ear portions of the fiber-reinforced sheet 1. In this case, the fourth fiber sheet 7 does not move because it is held by the paired holding members 76 and 76.

When the cutting operation is ended, as shown in Fig. 12B, the paired first holding members 76 and 76 and the cutters 86 and 86 are moved upward.

(4-7) Sixth Step

The sixth step is described with reference to Fig. 12C.

At the sixth step, as shown in Fig. 12C, the unnecessary portions, as gripped by the grip members 84, of the fourth fiber sheet 7 is discarded, and the portion of the same held by the second holding member 82 is held till the next step.

Then, the fiber-reinforced sheet 1 having the fourth axes is again made to travel.

When the fourth fiber sheet 7 of the width W is laminated on the triangular fiber-reinforced sheet 1 by the operations of the first step to the sixth step, as described above, the triangular fiber-reinforced sheet 1 moved only by the width of the fourth fiber sheet 7 and is again stopped. By the operations of the steps like the aforementioned ones, moreover, the fourth fiber sheet 7 is again laminated. Thus, the fourth fiber sheet 7 of the width W is so sequentially laminated on the triangular fiber-reinforced sheet 1.

(5) Adjustment of Traveling State

In case the fourth fiber sheet 7 is laminated on the triangular fiber-reinforced sheet 1, as described above, the triangular fiber-reinforced sheet 1 has to be stopped on the second tenter chains 56 and 56. However, the triangular fiber-reinforced sheet 1 is manufactured by continuing the steps at and before the second tenter chains 56 and 56.

At the steps subsequent to the second tenter chains 56 and 56, on the other hand, the quadrangular fiber-reinforced sheet 1 is continuously recovered by the sheet recovery roll 44.

As a result, the first adjust roll 60 and the second adjust roll 62 exist for adjusting the length of the fiber-reinforced sheet 1 during the stop time. These operations are described in the following with reference to Figs. 11A to 11C and Figs. 12A to 12C.

(5-1) Stopping State

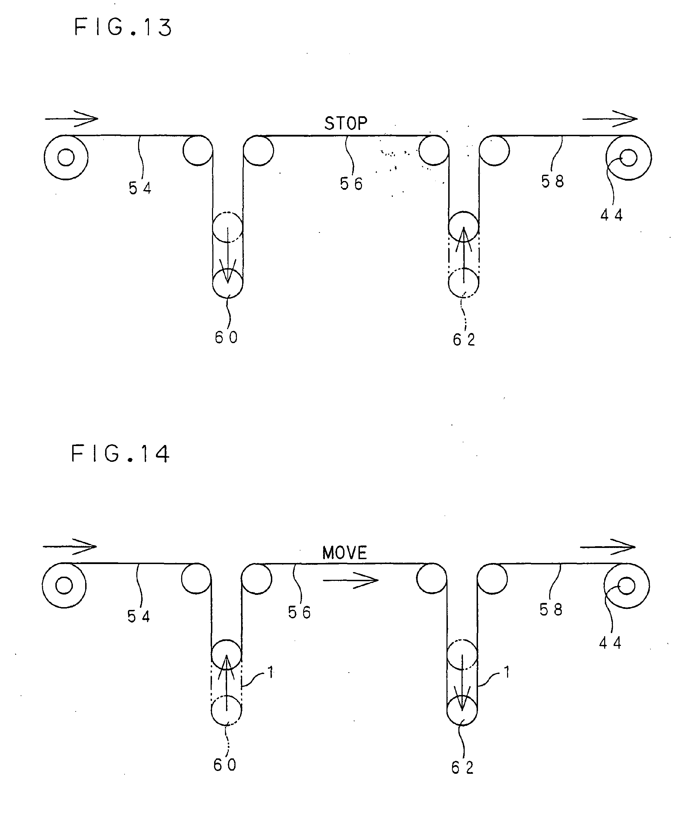

In case the second tenter chains 56 and 56 stop and the travel of the triangular fiber-reinforced sheet 1 stops, the first adjust roll 60 is moved downward to absorb the length of the triangular fiber-reinforced sheet 1 fed from the first tenter chains 54 and 54, as shown in Fig. 13.

On the other hand, the quadrangular fiber-reinforced sheet 1 fed from the second tenter chains 56 and 56 is also stopped so that its portion loosened by the second adjust roll 62 is fed to the third tenter chains 58 and 58. As a result, even in the stopped state of the second tenter chains 56, the fiber-reinforced sheet manufacturing apparatus 10 need not stop its travel in its entirety.

(5-2) Traveling State

Next, when the second tenter chains 56 and 56 end the laminating operation of the fourth fiber sheet 7 and start the travel, the first adjust roll 60 is again moved upward, as shown in Fig. 14, to feed the triangular fiber-reinforced sheet 1 held loose to the second tenter chains 56. On the other hand, the second adjust roll 62 is moved downward so that the quadrangular fiber-reinforced sheet 1 fed from the second tenter chains 56 and 56 may be loosened for the case of the next stop.

The stopping state and the traveling state are repeated, as described above.

(Modification of Fourth Embodiment)

In the fourth embodiment, the fourth fiber sheet 7 is laminated on the triangular fiber-reinforced sheet 1 manufactured by the first embodiment. Alternatively, the fourth fiber sheet 7 may be laminated on the triangular fiber-reinforced sheet 1 manufactured by the second embodiment or the third embodiment.

## Claims

1. In a multiaxial fiber-reinforced sheet, a first fiber sheet having a fiber bundle arranged and arrayed in one direction is arranged along the longitudinal direction of said fiber-reinforced sheet, and
at least one sheet of fiber bundle different from said first fiber sheet is sequentially folded back and helically wound on said first fiber sheet at an inclination of a predetermined angle of θ degrees (0 degrees < θ < 90 degrees),
a fiber-reinforced sheet having three layers comprising:

   a first fiber sheet having a fiber bundle direction of 0 degrees with respect to said longitudinal direction;
   a second fiber sheet having a fiber bundle direction of +θ degrees with respect to said longitudinal direction; and
   a third fiber sheet having a fiber bundle direction of -θ degrees with respect to said longitudinal direction.

2. In a multiaxial fiber-reinforced sheet,
a first fiber sheet having a fiber bundle arranged and arrayed in one direction is arranged along the longitudinal direction of said fiber-reinforced sheet,
at least one sheet of fiber bundle different from said first fiber sheet is sequentially folded back and helically wound on said first fiber sheet at an inclination of a predetermined angle of θ degrees (0 degrees < θ < 90 degrees), and
said helically wound fiber sheet is laid on said first fiber sheet,
a fiber-reinforced sheet having three layers comprising:

   a first fiber sheet having a fiber bundle direction of 0 degrees with respect to said longitudinal direction;
   a second fiber sheet having a fiber bundle direction of +θ degrees with respect to said longitudinal direction; and
   a third fiber sheet having a fiber bundle direction of -θ degrees with respect to said longitudinal direction.

3. A fiber-reinforced sheet according to claim 1 or 2, wherein 15 degrees ≤ θ degrees ≤ 75 degrees.

4. A fiber-reinforced sheet according to claim 1, 2 or 3, wherein said fiber bundles are so folded back as arranged in plurality.

5. In a process for manufacturing a multiaxial fiber-reinforced sheet,
a first fiber sheet having a fiber bundle arranged and arrayed in one direction is caused to travel along the longitudinal direction of said fiber-reinforced sheet,
a process for manufacturing a fiber-reinforced sheet, comprising:
a first step of drawing at least one sheet of fiber bundle different from said first fiber sheet at an inclination of +θ degrees (0 degrees < θ < 90 degrees) with respect to
a second step of folding back said formed second fiber sheet from said first fiber sheet at an inclination of -θ degrees with respect to said longitudinal direction;
a third step of drawing said folded-back second fiber sheet to form a third fiber sheet;
a fourth step of folding back said formed third fiber sheet from said first fiber sheet at an inclination of +θ degrees with respect to said longitudinal direction; and
a fifth step of drawing said folded-back third fiber sheet to form a fourth fiber sheet,
wherein one cycle including said second step to said fifth step is repeated to wind said fiber bundle helically on said first fiber sheet thereby to extend said fiber-reinforced sheet in the longitudinal direction.

**6.** In a process for manufacturing a multiaxial fiber-reinforced sheet,
a first fiber sheet having a fiber bundle arranged and arrayed in one direction is caused to travel along the longitudinal direction of said fiber-reinforced sheet,
a process for manufacturing a fiber-reinforced sheet, comprising:
a first step of drawing at least one sheet of fiber bundle different from said first fiber sheet at an inclination of +θ degrees (0 degrees < θ < 90 degrees) with respect to the longitudinal direction of said fiber-reinforced sheet, to form a second fiber sheet;
a second step of folding back said formed second fiber sheet from said first fiber sheet at an inclination of -θ degrees;
a third step of drawing said folded-back second fiber sheet to form a third fiber sheet;
a fourth step of folding back said formed third fiber sheet from said first fiber sheet at an inclination of +θ degrees; and
a fifth step of drawing said folded-back third fiber sheet to form a fourth fiber sheet,
wherein one cycle including said second step to said fifth step is repeated to wind said fiber bundle helically and to laminate said first fiber sheet on said wound fiber bundle thereby to extend said fiber-reinforced sheet in the longitudinal direction.

**7.** The invention of any preceding claim,
wherein a fourth fiber sheet having a fiber bundle of a direction of 90 degrees with respect to the longitudinal direction and having a length substantially equal to the width size of said fiber-reinforced sheet is laminated in plurality along the longitudinal direction of said fiber-reinforced sheet in addition to the fiber-reinforced sheet having said first fiber sheet, said second fiber sheet and said third fiber sheet laminated.

**8.** The invention of any preceding claim,
wherein the fiber bundle configuring each of said fiber bundles is configured to have split yarns continuously split into a wide and thin shape.

**9.** The invention of any preceding claim,
wherein each of said fiber bundles is made of a fiber bundle of thermally fused yarns or a fiber bundle adhered with a sealer.

**10.** The invention of any preceding claim, wherein each of said fiber bundles is a prepreg sheet impregnated with a thermoplastic resin or a thermoset resin.

**11.** The invention of any preceding claim,
wherein said first fiber sheet, said second fiber sheet and said third fiber sheet are pressed or pressed while being heated.

**12.** In an apparatus for manufacturing a multiaxial fiber-reinforced sheet,
an apparatus for manufacturing a fiber-reinforced sheet, comprising:

first fiber sheet feed means for feeding a first fiber sheet having a fiber bundle arranged and arrayed in one direction;
a pair of tenter chains for transferring the first fiber sheet fed from said first fiber sheet feed means, along the longitudinal direction of said fiber-reinforced sheet;
second fiber sheet feed means for feeding at least one sheet of fiber bundle different from said first fiber sheet;
fiber sheet winding means for: rotating said fiber bundle fed from said second fiber sheet feed means, at an inclination of a predetermined angle of θ degrees (0 degrees < θ < 90 degrees) with respect to said first fiber sheet while applying the same to said first fiber sheet; and folding back said fiber bundle sequentially and individually at the positions of said paired tenter chains to wind the same helically, thereby to form said fiber-reinforced sheet having three layers including: said first fiber sheet having the fiber bundle at an inclination of 0 degrees with respect to said longitudinal direction; a second fiber sheet having a fiber bundle at an inclination of +θ degrees with respect to said longitudinal direction; and a third fiber sheet having a fiber bundle at an inclination of -θ degrees with respect to said longitudinal direction; and
fiber-reinforced sheet recovery means for recovering said formed fiber-reinforced sheet.

**13.** In an apparatus for manufacturing a multiaxial fiber-reinforced sheet,
an apparatus for manufacturing a fiber-reinforced sheet, comprising:

first fiber sheet feed means for feeding a first fiber sheet having a fiber bundle arranged and arrayed in one direction;

a pair of tenter chains for travelling along the longitudinal direction of said fiber-reinforced sheet;
second fiber sheet feed means for feeding at least one sheet of fiber bundle different from said first fiber sheet;
fiber sheet winding means for: rotating said fiber bundle fed from said second fiber sheet feed means, at an inclination of a predetermined angle of θ degrees (0 degrees < θ < 90 degrees) with respect to said paired tenter chains while applying the same to said first fiber sheet; and folding back said fiber bundle sequentially and individually at the positions of said paired tenter chains to wind the same helically, thereby to form said fiber-reinforced sheet having two layers including: a second fiber sheet having a fiber bundle at an inclination of +θ degrees with respect to said longitudinal direction; and a third fiber sheet having a fiber bundle at an inclination of -θ degrees with respect to said longitudinal direction;
first fiber sheet laminating means for laminating the first fiber sheet fed from said first fiber sheet feed means, on said two-layered fiber sheet, thereby to form the fiber-reinforced sheet; and
fiber-reinforced sheet recovery means for recovering said formed fiber-reinforced sheet.

**14.** An apparatus for manufacturing a fiber-reinforced sheet according to claim 12 or 13, further comprising:

fourth fiber sheet feed means for feeding a fourth fiber sheet having a fiber bundle at an angle of 90 degrees with respect to said longitudinal direction;
fourth fiber sheet laminating means for laminating said fourth fiber sheet on the fiber-reinforced sheet having said three laminated layers; and
cutting means for cutting said fourth fiber sheet in said laminated state according to the width size of said fiber-reinforced sheet.

**15.** An apparatus according to claim 12, 13 or 14, wherein said first fiber sheet feed means and said second fiber sheet feed means are fiber sheet winding means wound with said fiber bundle.

**16.** An apparatus according to any of claims 12 to 15, wherein said first fiber sheet feed means and said second fiber sheet feed means are a plurality of fiber sheet winding means wound with said fiber bundle.

**17.** An apparatus according to any of claims 12 to 16, further comprising:

pressure means for pressing or pressing while heating said fiber-reinforced sheet, thereby to adhere said individual fiber bundles.

**18.** An apparatus according to claim 17, wherein said pressure means arranges peeling films on the two faces of said fiber-reinforced sheet thereby to press or press while heating the peeling films.

**19.** The invention of any preceding claim, wherein each of said fiber bundles has a thickness of 0.005 to 0.08 mm.

FIG. 1

1
2
6
5
6
B
3
L
4
W
WIDTHWISE DIRECTION
+θ
−θ
LONGITUDINAL DIRECTION

FIG. 2

2
30
10
12
TM1
5
3
36
2
SM1
38
34
SM2
40
24
32
42
24
49
46
1
48
z
TM2
x
44
y

FIG. 3

30
16
16
TM1
14
16
14
36
32
12
20
SM1
TM3
40
42
38
16
24
24
16
46
48
44

FIG. 4

12
18
18
18
2
20
20
22
22
24
28
18

FIG. 5

10
TM1
TM2
TM3
SM1
SM2
HEATING ROLLER
46,48
CONTROL UNIT
50
OPERATION UNIT
52

FIG. 6

1
2
6
5
2
6
B2
B1
3-1
3-2
L
W
WIDTHWISE DIRECTION
-θ
+θ
LONGITUDINAL DIRECTION

FIG. 7

30
10
12
12
TM1
5
36
SM1
38
SM2
24
40
42
24
46
48
1
TM2
44

FIG. 8

LONGITUDINAL
DIRECTION (θ°=0°)
1
−θ
+θ
WIDTHWISE
DIRECTION
(θ° =90°)
W
W
6
7
2
1
3

FIG. 9

2
30
12
10
TM1
5
36
38
SM2
34
40
24
42
7
W
24
54
64
70
44
60
57
56
62
66
70
58
72
74
74
72

FIG.10A
FIG.10B
FIG.10C
1
7
56
76
78
80
82
84
86

FIG.11A
FIG.11B
FIG.11C
1
7
56
76
78
80
82
86
W

FIG.12A
FIG.12B
FIG.12C
1
7
56
76
78
80
82
86
W

FIG.13

STOP
54
56
58
44
60
62

FIG.14

MOVE
54
56
58
44
1
1
60
62

European Patent Office

# EUROPEAN SEARCH REPORT

Application Number
EP 06 00 3053

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | PATENT ABSTRACTS OF JAPAN vol. 2003, no. 12, 5 December 2003 (2003-12-05) & JP 2003 221771 A (FUKUI PREFECTURE; MITSUYA:KK), 8 August 2003 (2003-08-08) * abstract; figures 1-13 * | 1-19 | INV. D04H3/04 D04H13/00 |
| Y | EP 0 768 167 A (POTT, RICHARD, DIPL.-ING) 16 April 1997 (1997-04-16) * column 4, line 36 - column 5, line 5 * | 1-19 | |
| Y | EP 1 174 533 A (TORAY INDUSTRIES, INC) 23 January 2002 (2002-01-23) * paragraphs [0011] - [0038]; figures 1-7 * | 1-19 | |
| Y | WO 02/070806 A (SAINT-GOBAIN VETROTEX FRANCE S.A; LOUBINOUX, DOMINIQUE) 12 September 2002 (2002-09-12) * page 8, line 11 - line 16; figures 1-3 * | 1-19 | |
| | | | TECHNICAL FIELDS SEARCHED (IPC) |
| | | | D04H |

The present search report has been drawn up for all claims

| Place of search | Date of completion of the search | Examiner |
|---|---|---|
| Munich | 4 May 2006 | Mangin, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

2
EPO FORM 1503 03.82 (P04C01)

## ANNEX TO THE EUROPEAN SEARCH REPORT ON EUROPEAN PATENT APPLICATION NO. EP 06 00 3053

This annex lists the patent family members relating to the patent documents cited in the above-mentioned European search report. The members are as contained in the European Patent Office EDP file on
The European Patent Office is in no way liable for these particulars which are merely given for the purpose of information.

04-05-2006

| Patent document cited in search report | | Publication date | Patent family member(s) | | | Publication date |
|---|---|---|---|---|---|---|
| JP 2003221771 | A | 08-08-2003 | NONE | | | |
| EP 0768167 | A | 16-04-1997 | DE | 19537663 | A1 | 17-04-1997 |
| | | | JP | 9169070 | A | 30-06-1997 |
| EP 1174533 | A | 23-01-2002 | AU | 768434 | B2 | 11-12-2003 |
| | | | AU | 3598201 | A | 03-09-2001 |
| | | | CA | 2370846 | A1 | 30-08-2001 |
| | | | WO | 0163033 | A1 | 30-08-2001 |
| | | | NO | 20015248 | A | 26-10-2001 |
| | | | TW | 546431 | B | 11-08-2003 |
| | | | US | 2002160146 | A1 | 31-10-2002 |
| WO 02070806 | A | 12-09-2002 | BR | 0207763 | A | 01-06-2004 |
| | | | CA | 2450672 | A1 | 12-09-2002 |
| | | | CN | 1507510 | A | 23-06-2004 |
| | | | CZ | 20032358 | A3 | 14-04-2004 |
| | | | EP | 1373621 | A1 | 02-01-2004 |
| | | | FR | 2821631 | A1 | 06-09-2002 |
| | | | JP | 2004530053 | T | 30-09-2004 |
| | | | MX | PA03007803 | A | 08-12-2003 |
| | | | PL | 363882 | A1 | 29-11-2004 |
| | | | SK | 10842003 | A3 | 06-04-2004 |
| | | | US | 2004082244 | A1 | 29-04-2004 |

EPO FORM P0459

For more details about this annex : see Official Journal of the European Patent Office, No. 12/82